# EUROPÄISCHE PATENTSCHRIFT

(11) **EP 4 316 782 B1**
(45) Veröffentlichungstag und Bekanntmachung des Hinweises auf die Patenterteilung: **12.03.2025**
(21) Anmeldenummer: 22020364.0
(22) Anmeldetag: 01.08.2022
(51) Int. Cl.: B29C 64/124, B29C 64/286, B33Y 30/00

(54) **VERFAHREN UND VORRICHTUNG ZUR LITHOGRAPHIEBASIERTEN GENERATIVEN FERTIGUNG EINES DREIDIMENSIONALEN BAUTEILS**
METHOD AND DEVICE FOR LITHOGRAPHY-BASED ADDITIVE MANUFACTURING OF A THREE-DIMENSIONAL COMPONENT
PROCÉDÉ ET DISPOSITIF DE FABRICATION ADDITIVE PAR LITHOGRAPHIE D'UN COMPOSANT TRIDIMENSIONNEL

(43) Veröffentlichungstag der Anmeldung: 07.02.2024
(73) Patentinhaber: UpNano GmbH, 1030 Wien (AT)
(72) Erfinder: GRUBER, Peter, A-1140 Wien (AT); SCHEUCHER, Michael, A-1130 Wien (AT)
(74) Vertreter: SONN Patentanwälte GmbH & Co KG

(56) Entgegenhaltungen:
- EP-A1- 2 905 121
- US-A1- 2013 130 182
- US-A1- 2018 015 672

## Beschreibung

Die Erfindung betrifft ein Verfahren zur lithographiebasierten generativen Fertigung eines dreidimensionalen Bauteils, bei dem ein von einer elektromagnetischen Strahlungsquelle ausgesendeter Strahl mit einem Strahlteiler auf eine Mehrzahl von Strahlen aufgeteilt wird, die mittels einer optischen Abbildungseinheit auf Fokuspunkte innerhalb eines Materials fokussiert werden und die Fokuspunkte mittels einer der optischen Abbildungseinheit in Strahlrichtung vorgeordneten Ablenkeinheit verlagert werden, wodurch nacheinander jeweils an den Fokuspunkten befindliche Volumenelemente des Materials mittels Multiphotonenabsorption verfestigt werden.

Die Erfindung betrifft weiters eine Vorrichtung zur lithographiebasierten generativen Fertigung eines dreidimensionalen Bauteils.

Ein Verfahren zur Ausbildung eines Bauteils, bei dem die Verfestigung eines photosensitiven Materials mittels Multiphotonenabsorption vorgenommen wird, ist beispielsweise aus der DE 10111422 A1 bekannt geworden. Dazu strahlt man mit einem fokussierten Laserstrahl in das Bad des photosensitiven Materials ein, wobei die Bestrahlungsbedingungen für einen die Verfestigung auslösenden Mehrphotonenabsorptionsprozess nur in unmittelbarer Umgebung des Fokus erfüllt sind, sodass man den Fokus des Strahls nach Maßgabe der Geometriedaten des herzustellenden Formkörpers innerhalb des Badvolumens zu den zu verfestigenden Stellen führt.

Am jeweiligen Fokuspunkt wird hierbei ein Volumenelement des Materials verfestigt, wobei benachbarte Volumenelemente aneinanderhaften und das Bauteil durch nacheinander erfolgendes Verfestigen von benachbarten Volumenelementen aufgebaut wird. Beim Aufbau des Bauteils kann man schichtweise vorgehen, d.h. es werden zuerst Volumenelemente einer ersten Schicht verfestigt, bevor Volumenelemente einer nächsten Schicht verfestigt werden.

Bestrahlungseinrichtungen für MultiphotonenAbsorptionsverfahren umfassen eine Optik zum Fokussieren eines Laserstrahls sowie eine Ablenkeinrichtung zum Ablenken des Laserstrahls. Die Ablenkeinrichtung ist hierbei ausgebildet, um den Strahl nacheinander auf Fokuspunkte innerhalb des Materials zu fokussieren, die in ein und derselben, vorzugsweise senkrecht zur Einstrahlrichtung des Strahls in das Material verlaufenden Ebene liegen. In einem x,y,z-Koordinatensystem wird diese Ebene auch als x,y-Ebene bezeichnet. Die durch die Strahlablenkung in der x,y-Ebene entstandenen verfestigten Volumenelemente bilden eine Schicht des Bauteils aus. Um ein kontinuierliches Arbeiten der Ablenkeinrichtung zu ermöglichen, wird der Strahl zwischen der Verfestigung zweier aufeinanderfolgender Volumenelemente unterbrochen bzw. aus- und wieder eingeschaltet.

Für den Aufbau einer nächsten Schicht erfolgt eine Veränderung der Relativposition der Fokussieroptik relativ zum Bauteil in der z-Richtung, welche einer Einstrahlrichtung des wenigstens einen Strahls in das Material entspricht und senkrecht zur x,y-Ebene verläuft. Durch die zumeist motorisch erfolgende Verstellung der Fokussieroptik relativ zum Bauteil wird der Fokuspunkt in eine neue x,y-Ebene verlagert, welche in z-Richtung um die gewünschte Schichtdicke von der vorangehenden x,y-Ebene beabstandet ist.

Die Strukturierung eines geeigneten Materials mittels Multiphotonenabsorption bietet den Vorteil einer überaus hohen Strukturauflösung, wobei Volumenelemente mit minimalen Strukturgrößen von bis zu 50nm x 50nm x 50nm erzielbar sind. Bedingt durch das kleine Fokuspunktvolumen ist der Durchsatz eines solchen Verfahrens allerdings sehr gering, da z.B. für ein Volumen von 1mm³ insgesamt mehr als 10⁹ Punkte belichtet werden müssen. Dies führt zu sehr langen Bauzeiten, was der Hauptgrund für den geringen industriellen Einsatz von MultiphotonenabsorptionsVerfahren ist.

Um den Bauteiledurchsatz zu erhöhen ohne die Möglichkeit einer hohen Strukturauflösung zu verlieren, wurde bereits vorgeschlagen, das Volumen des Fokuspunkts während des Aufbaus des Bauteils zumindest einmal zu variieren, sodass das Bauteil aus verfestigten Volumenelementen unterschiedlichen Volumens aufgebaut wird. Durch das variable Volumen des Fokuspunktes sind (bei kleinem Fokuspunktvolumen) hohe Auflösungen möglich. Gleichzeitig ist (bei großem Fokuspunktvolumen) eine hohe Schreibgeschwindigkeit (gemessen in mm³/h) erzielbar. Durch das Variieren des Fokuspunktvolumens kann also eine hohe Auflösung mit großem Durchsatz kombiniert werden. Die Variation des Fokuspunktvolumens kann dabei zum Beispiel so genutzt werden, dass im Inneren des aufzubauenden Bauteils ein großes Fokuspunktvolumen verwendet wird, um den Durchsatz zu erhöhen, und an der Oberfläche des Bauteils ein kleineres Fokuspunktvolumen zur Anwendung kommt, um die Bauteiloberfläche mit hoher Auflösung auszubilden. Eine Vergrößerung des Fokuspunktvolumens ermöglicht einen höheren Strukturierungsdurchsatz, da das in einem Belichtungsvorgang verfestigte Materialvolumen vergrößert wird. Um bei hohem Durchsatz eine hohe Auflösung beizubehalten, können kleine Fokuspunktvolumina für feinere Strukturen und Oberflächen, und größere Fokuspunktvolumina für grobe Strukturen und/oder zum Füllen von Innenräumen verwendet werden. Verfahren und Vorrichtungen zur Veränderung des Fokuspunktvolumens sind in der WO 2018/006108 A1 beschrieben.

Eine weitere Möglichkeit zur Erhöhung der Schreibgeschwindigkeit besteht darin, den Schreibstrahl mit Hilfe eines Strahlteilers in eine Mehrzahl von Schreibstrahlen aufzuteilen, die jeweils in das zu verfestigende Material fokussiert werden, sodass ein paralleles Verfestigen mehrerer Volumenelemente ermöglicht wird (Kelemen et al: "Parallel photopolymerisation with complex light pattners generated by diffractive optical elements", Optics Express, Vol. 15, No. 22, p. 14488-14497). Allerdings lassen sich die einzelnen Schreibstrahlen nicht unabhängig voneinander positionieren, sodass lediglich eine der Anzahl der Strahlen entsprechende Mehrzahl gleichartiger Bauteile herstellbar ist.

Im Bereich der Stereolithographie ist es aus der US 5,536,467 bekannt, eine Mehrzahl von Schreibstrahlen unabhängig voneinander anzusteuern, wobei jeder Schreibstrahl von einem eigenen Spiegel an die entsprechende Position im zu verfestigten Material abgelenkt wird. Nachteilig ist jedoch, dass die Ablenkeinrichtung mechanisch betätigte Spiegel umfasst, sodass die Scangeschwindigkeit begrenzt ist, und dass die dargestellte Vorrichtung nicht für die Verfestigung von Volumenelementen mittels Multiphotonenabsorption geeignet ist. Außerdem steigt der apparative Aufwand proportional zur Anzahl der unabhängig voneinander zu bewegenden Schreibstrahlen. Weitere gattungsgemäße Verfahren sind aus der EP2905121 A1 bekannt.

Die Erfindung zielt darauf ab, ein Verfahren und eine Vorrichtung zur lithographiebasierten generativen Fertigung eines dreidimensionalen Bauteils dahingehend weiterzuentwickeln, dass die Schreibgeschwindigkeit (gemessen in mm³/h) ohne Einschränkung der Bauteilgeometrie und mit geringem apparativen Aufwand noch weiter erhöht wird.

Zur Lösung dieser Aufgabe sieht ein erster Aspekt der Erfindung bei einem Verfahren der eingangs genannten Art vor, dass ein räumlicher Lichtmodulator mit einer Mehrzahl elektronisch ansteuerbarer Pixel vorgesehen wird, die von der Mehrzahl von Strahlen abgerastert werden und die in Abhängigkeit von der zu verwirklichenden Geometrie des Bauteils einzeln zwischen wenigstens einem Ein- und einem Aus-Zustand umgeschaltet werden, sodass der jeweilige Strahl lediglich in dem wenigstens einen Ein-Zustand zur Abbildungseinheit geleitet wird.

Der räumliche Lichtmodulator erlaubt es, mit einer Mehrzahl von Strahlen gleichzeitig zu arbeiten, und zwar mit einer Mehrzahl von Strahlen, die mittels der Ablenkeinheit zu gleichsinniger Bewegung abgelenkt werden, und für jeden Strahl einzeln zu kontrollieren, ob durch diesen an einer bestimmten Position innerhalb des Materials ein Volumenelement verfestigt werden soll oder nicht. Dadurch wird ein paralleles Schreiben mit einer Mehrzahl von Strahlen ermöglicht, ohne dass jeder Strahl dieselbe Geometrie erzeugt und ohne dass für jeden Strahl eine eigene Ablenkeinrichtung vorzusehen wäre.

Die Ablenkeinheit verursacht vielmehr ein gemeinsames Ablenken aller Strahlen, welche die Pixel des Lichtmodulators daher in einem festen Pixelabstand abrastern (abscannen). Die Anzahl der Pixel des räumlichen Lichtmodulators entspricht hierbei einem Vielfachen der Anzahl von Strahlen. Da nun jedes Pixel unabhängig vom Zustand der anderen Pixel zwischen einem Ein- und einem Aus-Zustand umschaltbar ist, kann ausgewählt werden, ob das dem jeweiligen Pixel entsprechende Volumenelement innerhalb des Materials verfestigt werden soll oder nicht.

Als Pixel wird hierbei jener Teilbereich des räumlichen Lichtmodulators bezeichnet, dessen Bestrahlung durch einen Strahl im Ein-Zustand des Pixels die Verfestigung eines Volumenelements im Material bewirkt.

Eine wesentliche Erhöhung der Schreibgeschwindigkeit ergibt sich hierbei auch dadurch, dass auf Grund der Vielzahl von Pixeln die Summe der Umschaltrate aller Pixel höher ist als die bei herkömmlichen Systemen, wie z.B. Systemen, die mit einem akusto-optischen Modulator arbeiten. Ein akustooptischer Modulator ist in der Lage, einen Strahl mit einer Rate von z.B. 50 MHz ein- und auszuschalten, sodass 50 Mio. Volumenelemente/sek geschrieben werden können. Derzeit erhältliche räumliche Lichtmodulatoren haben eine geringere Umschaltrate je Pixel; das gesamte Pixelarray kann im Falle eines zweidimensionalen Arrays mit einer Rate von z.B. 180 Hz seinen Schaltzustand ändern. Allerdings ergibt sich bei einer Multiplikation mit der Anzahl der Pixel eine überaus hohe Schreibgeschwindigkeit. So können bei entsprechender Scangeschwindigkeit der Ablenkeinheit mit einem räumlichen Lichtmodulator mit einer Anzahl von z.B. 2 Mio. Pixel und einer Umschaltrate von 180 Hz 360 Megapixel/sek geschrieben werden.

Gemäß einer bevorzugten Ausbildung der Erfindung sind die Pixel des räumlichen Lichtmodulators in wenigstens einer, z.B. genau einer, entlang einer Geraden verlaufenden Reihe angeordnet und die Aufteilung der Strahlen mittels des Strahlteilers erfolgt entlang der Geraden, sodass die Strahlen um eine Mehrzahl von Pixeln voneinander beabstandet auf die Reihe von Pixeln auftreffen. Die Ablenkung der Strahlen durch die Ablenkeinheit erfolgt hierbei ebenfalls entlang der genannten Geraden. Beispielsweise erzeugt der Strahlteiler 50 Strahlen, die entlang der Geraden in einem Abstand von 20 Pixeln auf die Pixelreihe auftreffen. Die Ablenkeinheit wird nun angesteuert, um die 50 Strahlen gemeinsam um einen Winkel abzulenken, sodass die Strahlen die 20 Pixel überstreichen, sodass am Ende der Ablenkbewegung jedes Pixel der 1000 Pixel umfassenden Pixelreihe bestrahlt wurde.

Im einfachsten Fall kommt ein eindimensionaler räumlicher Lichtmodulator zum Einsatz, dessen Pixel in einer einzigen Reihe angeordnet sind. Ein solcher Lichtmodulator wird auch als Zeilenmodulator bezeichnet, wobei der Zeilenmodulator beispielsweise als "Grating Light Valve" ausgebildet sein kann, d.h. als dynamisch einstellbares Beugungsgitter. Für jedes Pixel ist hierbei ein gesondert ansteuerbares Beugungsgitter vorgesehen, das z.B. winzige Metallstreifen umfasst, die elektrostatisch auf und ab bewegt werden können. Hierdurch kann jedes Pixel zwischen Gitterfunktion und reflektierendem Spiegel hin- und hergeschaltet werden.

Im Falle eines Zeilenmodulators ist eine Strahlablenkung um lediglich eine einzige Achse erforderlich. Die Strahlablenkdung kann hierbei beispielsweise durch einen akustooptischen Deflektor erfolgen, wodurch eine überaus hohe Ablenkgeschwindigkeit und damit eine hohe Schreibgeschwindigkeit erreicht werden kann.

Da bei Verwendung eines Zeilenmodulators lediglich Volumenelemente des Bauteils verfestigt werden können, die sich entlang einer geraden Reihe befinden, muss der Bauteil- bzw. Materialträger nach jeder Reihe relativ zur optischen Abbildungseinheit quer zur Reihe verschoben werden, um eine weitere Reihe zu schreiben.

Gemäß einer weiteren bevorzugten Ausführungsform der Erfindung sind die Pixel des räumlichen Lichtmodulators in mehreren parallelen Reihen angeordnet. Ein derartiger Lichtmodulator mit einer zweidimensionalen Anordnung der Pixel erlaubt die Verfestigung von Volumenelementen innerhalb des Materials in einem zweidimensionalen Raster, ohne dass der Bauteil- bzw. Materialträger relativ zu optischen Abbildungseinheit verstellt werden muss.

Die Strahlen werden hierbei um zwei zueinander bevorzugt senkrechte Achsen abgelenkt, wobei für die Ablenkung um eine erste Achse, die der Achse normal zur Strahlaufteilung entspricht, ein schneller Scanner verwendet werden kann und für die Ablenkung um eine zweite Achse ein langsamerer Scanner ausreichend ist. Beispielsweise erfolgt die Strahlablenkung um die erste Achse mittels eines Resonanz-Scanners oder eines Polygonscanners und die Strahlablenkung um die zweite Achse mittels eines Galvanometer-Scanners.

Ein Lichtmodulator mit einer zweidimensionalen Anordnung der Pixel kann vorzugsweise als reflektierendes Flüssigkristall-Mikrodisplay ausgebildet sein. Ein solcher Lichtmodulator wird auch als "Liquid Crystal on Silicon device" oder "LCoS device" bezeichnet.

Die erfindungsgemäße Verwendung eines räumlichen Lichtmodulators erlaubt überdies in einfacher Weise eine pixelweise Anpassung der Strahlungsintensität des in das Material fokussierten Strahls, um ein sog. "grayscaling" zu erreichen. Eine bevorzugte Ausführungsform des erfindungsgemäßen Verfahrens sieht in diesem Zusammenhang vor, dass der wenigstens eine Ein-Zustand wenigstens einen ersten und einen zweiten Ein-Zustand umfasst, wobei die Pixel einzeln zwischen dem Aus-Zustand und dem ersten und dem zweiten Ein-Zustand umgeschaltet werden, wobei der erste und der zweite Ein-Zustand voneinander verschiedene Strahlungsintensitäten am Fokuspunkt erzeugen. Diese Graustufen-Funktion bietet den Vorteil, dass die Intensität der eingebrachten Strahlung per Pixel kontrolliert werden kann.

Dies kann genutzt werden, um eine Homogenisierung der Strahlungsleistung über alle Volumenelemente zu erreichen, d.h. um sicherzustellen, dass jedes Volumenelement des Materials mit derselben Strahlungsleistung bestrahlt wird. Eine Anpassung bzw. Verringerung der Strahlungsintensität ist beispielsweise für solche Volumenelemente vorteilhaft, die sich an den Umkehrpunkten der Strahlablenkung befinden und deshalb länger bestrahlt werden könnten als dazwischen liegende Volumenelemente. Dasselbe gilt für Volumenelemente bzw. Pixel, die beim Abrastern zweimal erfasst werden. Eine bevorzugte Ausbildung der Erfindung sieht in diesem Zusammenhang vor, dass die Strahlungsintensität jedes Pixels des räumlichen Lichtmodulators einstellbar ist und die Strahlungsintensität in Abhängigkeit von der Belichtungsdauer der Pixels derart eingestellt wird, dass die Volumenelemente dieselbe Strahlungsleistung erhalten. Hierfür ist eine geeignete Steuereinheit vorgesehen, welche die Strahlungsintensität in Abhängigkeit von der Belichtungsdauer einstellt.

Alternativ oder zusätzlich kann die Einstellung der Strahlungsintensität auch verwendet werden, um die Strahlungsleistung an einzelnen Volumenelementen zu variieren, um ohne Veränderung der Relativposition zwischen der Abbildungseinheit und der Bauplattform ein Höhenprofil in z-Richtung zu erreichen. Eine bevorzugte Ausbildung der Erfindung sieht in diesem Zusammenhang vor, dass die Strahlungsintensität jedes Pixels des räumlichen Lichtmodulators einstellbar ist und die Strahlungsintensität derart eingestellt wird, dass Volumenelemente voneinander verschiedene Strahlungsleistung erhalten, um Volumenelemente mit voneinander verschiedener räumlicher Ausdehnung, insbesondere in Einstrahlungsrichtung, zu erzeugen. Die Einstellung der Strahlungsleistung erfolgt vorzugsweise mittels einer geeigneten Steuereinheit.

Räumliche Lichtmodulatoren sind meist derart gestaltet, dass der einfallende Lichtstrahl in dem wenigstens einen Ein-Zustand des jeweiligen Pixels reflektiert wird. Um einen möglichst einfachen Aufbau zu ermöglich, der die Anordnung des räumlichen Lichtmodulators zwischen der Ablenkeinheit und dem Strahlteiler einerseits und der optischen Abbildungseinheit andererseits erlaubt, sieht eine bevorzugte Ausführung der Erfindung vor, dass die Mehrzahl von Strahlen unter Zwischenschaltung eines polarisierenden Strahlteilers auf den räumlichen Lichtmodulator geleitet werden, die Strahlen vom räumlichen Lichtmodulator durch die sich im Ein-Zustand befindlichen Pixel reflektiert werden und mit geänderter Polarisierung auf den polarisierenden Strahlteiler auftreffen, der die Strahlen zur optischen Abbildungseinheit leitet.

In einer bevorzugten Weiterbildung des oben genannten Aufbaus kann ein Spiegel vorgesehen werden, wobei der räumliche Lichtmodulator und der Spiegel derart verlagert werden, dass wahlweise entweder der räumliche Lichtmodulator oder der Spiegel in eine im Strahlengang angeordnete Arbeitsposition gebracht wird. Dadurch kann zwischen einem erfindungsgemäßen Schreiben eines Bauteils unter Verwendung des Lichtmodulators und einem herkömmlichen parallelen Schreiben von gleichartigen Bauteilen gewechselt werden.

In einer anderen Weiterbildung kann der Strahlteiler als räumlicher Lichtmodulator ausgebildet sein, der ein statisches Hologramm oder eine dynamische Lichtmodulation erzeugt.

Bevorzugt wird das Bauteil schichtweise mit sich in einer x-y-Ebene erstreckenden Schichten aufgebaut, wobei der Wechsel von einer Schicht zu einer nächsten Schicht die Veränderung der Relativposition der optischen Abbildungseinheit relativ zum Bauteil in einer senkrecht zur x-y-Ebene verlaufenden z-Richtung umfasst. Die z-richtung entspricht hierbei im Wesentlichen der Einstrahlrichtung der Mehrzahl von Schreibstrahlen.

Eine bevorzugte Verfahrensweise ergibt sich, wenn das Material auf einem Materialträger, wie **z.B.** in einer Wanne, vorliegt, und die Bestrahlung des Materials von unten durch den für die Strahlung zumindest bereichsweise durchlässigen Materialträger erfolgt. Hierbei kann eine Bauplattform in Abstand vom Materialträger positioniert und das Bauteil durch Verfestigen von zwischen der Bauplattform und dem Materialträger befindlichem Material auf der Bauplattform aufgebaut werden. Alternativ ist es aber auch möglich, die Bestrahlung des Materials von oben vorzunehmen.

Das Prinzip der Multiphotonenabsorption wird im Rahmen der Erfindung genutzt, um im photosensitiven Materialbad einen photochemischen Vorgang zu initiieren. Multiphotonenabsorptionsverfahren umfassen beispielsweise auch Verfahren der 2-Photonenabsorption. Als Folge der photochemischen Reaktion kommt es zur Veränderung des Materials in mindestens einen anderen Zustand, wobei es typischerweise zu einer Photopolymerisation kommt. Das Prinzip der Multiphotonenabsorption beruht darauf, dass der genannte photochemische Vorgang nur in jenen Bereichen des Strahlengangs stattfindet, in denen eine für die Multiphotonenabsorption ausreichende Photonendichte vorliegt. Die höchste Photonendichte tritt im Brennpunkt des optischen Abbildungssystems auf, sodass die Multiphotonenabsorption mit ausreichender Wahrscheinlichkeit nur im Fokuspunkt auftritt. Außerhalb des Brennpunktes ist die Photonendichte geringer, sodass die Wahrscheinlichkeit der Multiphotonenabsorption außerhalb des Brennpunktes zu gering ist, um eine unumkehrbare Veränderung des Materials durch eine photochemische Reaktion zu bewirken. Die elektromagnetische Strahlung kann in der verwendeten Wellenlänge weitestgehend ungehindert das Material passieren und nur im Fokuspunkt kommt es zu einer Interaktion zwischen photosensitivem Material und elektromagnetischer Strahlung. Das Prinzip der Multiphotonenabsorption ist beispielsweise in Zipfel et al, "Nonlinear magic: multiphoton microscopy in the biosciences", NATURE BIOTECHNOLOGY VOLUME 21 NUMBER 11 NOVEMBER 2003, beschrieben.

Als Quelle für die elektromagnetische Strahlung kann es sich vorzugsweise um einen kollimierten Laserstrahl handeln. Der Laser kann sowohl eine oder mehrere, feste oder variable Wellenlängen emittieren. Insbesondere handelt es sich um einen kontinuierlichen oder gepulsten Laser mit Pulslängen im Nanosekunden-, Pikosekunden- oder Femtosekunden-Bereich. Ein gepulster Femtosekundenlaser bietet dabei den Vorteil, dass eine geringere mittlere Leistung für die Multiphotonenabsorption benötigt wird.

Unter photosensitivem Material wird jedes unter Baubedingungen fließfähige oder feste Material verstanden, das durch Multiphotonenabsorption im Fokuspunktvolumen in einen zweiten Zustand übergeht - beispielsweise durch Polymerisation. Die Materialveränderung muss sich dabei auf das Fokuspunktvolumen und dessen direkte Umgebung begrenzen. Die Veränderung der Substanzeigenschaften kann dauerhaft sein und beispielsweise in einer Veränderung von einem flüssigen in einen festen Zustand bestehen, kann jedoch auch nur vorübergehend sein. Auch eine dauerhafte Veränderung kann im Übrigen reversibel oder nicht reversibel sein. Die Änderung der Materialeigenschaften muss nicht zwingend vollständig von einem in den anderen Zustand übergehen, sondern kann auch als Mischform beider Zustände vorliegen.

Gemäß einem zweiten Aspekt der Erfindung wird eine Vorrichtung zur lithographiebasierten generativen Fertigung eines dreidimensionalen Bauteils, insbesondere zur Durchführung eines Verfahrens nach dem ersten Aspekt der Erfindung bereitgestellt, umfassend einen Materialträger für ein verfestigbares Material und eine Bestrahlungseinrichtung, die zur ortsselektiven Bestrahlung des verfestigbaren Materials mit wenigstens einem Strahl ansteuerbar ist, wobei die Bestrahlungseinrichtung einen Strahlteiler zur Aufteilung eines Eingangsstrahls in eine Mehrzahl von Strahlen, eine dem Strahlteiler im Strahlengang vor- oder nachgeordnete Ablenkeinheit und eine der Ablenkeinheit und dem Strahlteiler nachgeordnete optische Abbildungseinheit umfasst, um jeden Strahl nacheinander auf Fokuspunkte innerhalb des Materials zu fokussieren, wodurch jeweils ein am Fokuspunkt befindliches Volumenelement des Materials mittels Multiphotonenabsorption verfestigbar ist. Die Vorrichtung ist dadurch gekennzeichnet, dass zwischen der Abbildungseinheit einerseits und dem Strahlteiler und der Ablenkeinheit andererseits ein räumlicher Lichtmodulator mit einer Mehrzahl elektronisch ansteuerbarer Pixel angeordnet ist, die von der Mehrzahl von Strahlen abtastbar sind und die einzeln zwischen wenigstens einem Ein- und einem Aus-Zustand schaltbar sind, sodass der jeweilige Strahl lediglich in dem wenigstens einen Ein-Zustand zur Abbildungseinheit geleitet wird.

Als Strahlteiler kann ein diffraktives optisches Element verwendet werden, wie z.B. der 1D diffraktive Strahlteiler MS-802-I-Y-A oder MS-304-Y-I-Y von HOLO/OR Ltd.

Als Ablenkeinheit kann beispielsweise ein akustooptischer Modulator, ein Resonanz-Scanner, ein Polygonscanner, ein Galvanometer-Scanner oder Kombinationen hiervon verwendet werden.

Der Strahlteiler kann entweder vor oder nach der Ablenkeinheit angeordnet werden. Mit Rücksicht auf die beschränkte Winkeltoleranz von Strahlteilern kommt die Anordnung des Strahlteilers nach der Ablenkeinheit nur in Frage, wenn der maximale Ablenkwinkel relativ gering ist. Für größere Ablenkwinkel ist es bevorzugt, wenn die Ablenkeinheit nach dem Strahlteiler angeordnet ist.

Gemäß einer bevorzugten Ausbildung weist der räumliche Lichtmodulator eine eindimensionale Anordnung der Pixel auf. Insbesondere kann der räumliche Lichtmodulator hierbei ein dynamisch einstellbares Beugungsgitter umfassen. Wie bereits im Zusammenhang mit dem ersten Aspekt der Erfindung erläutert, kann hierbei ein sogenannter Zeilenmodulator zum Einsatz gelangen. Ein Zeilenmodulator ist in der Lage den Zustand der einzelnen Pixel mit einer Frequenz von mindestens 300 MHz zu ändern, sodass überaus hohe Abtast- und damit Schreibgeschwindigkeiten erzielbar sind.

Die Ablenkeinheit kann vorzugsweise wenigstens einen akustooptischen Modulator aufweisen, wobei der akustooptischen Modulator vor der Ablenkeinheit angeordnet werden kann. Ein akustooptischer Modulator ist ein optisches Bauelement, das einfallendes Licht in Frequenz, Ausbreitungsrichtung und/oder Intensität beeinflusst. Hierzu wird in einem transparenten Festkörper mit Schallwellen ein optisches Gitter erzeugt, an dem der Lichtstrahl gebeugt wird. Dies kann bei Ausbildungen, die als akustooptischer Deflektor bezeichnet werden, dazu genutzt werden, um eine Strahlablenkung zu erzeugen, wobei der Ablenkungswinkel von den relativen Wellenlängen von Licht- und Schallwellen im transparenten Festkörper abhängt. Durch eine Änderung der Schallwellenfrequenz kann hierbei der Ablenkungswinkel eingestellt werden.

Gemäß einer weiteren bevorzugten Ausbildung ist vorgesehen, dass der räumliche Lichtmodulator eine zweidimensionale Anordnung der Pixel aufweist. In diesem Zusammenhang kann der räumliche Lichtmodulator beispielsweise als reflektierendes Flüssigkristall-Mikrodisplay ausgebildet sein. Derartige LCoS Vorrichtungen verfügen über Frame-Raten von ≥ 60 Hz, was bedeutet, dass das gesamte Pixelraster über 60 Mal in der Sekunde hinsichtlich der Pixelzustände geändert werden kann. Im Falle eines schichtweisen Aufbaus des Bauteils können somit mindestens 60 Schichten von Volumenelementen je Sekunde im Material erzeugt werden, wenn man die für die Änderung der Schicht erforderliche Zeit nicht berücksichtigt.

Für das Scannen des zweidimensionalen Pixelrasters durch die Mehrzahl von Strahlen ist bevorzugt vorgesehen, dass die Ablenkeinheit als zweiachsige Ablenkeinheit ausgebildet ist und vorzugsweise einen Resonanz-Scanner oder einen Polygonscanner für die Strahlablenkung um eine erste Achse und einen Galvanometer-Scanner für die Strahlablenkung um eine zweite Achse umfasst.

Eine weitere bevorzugte Ausführung sieht vor, dass dem räumlichen Lichtmodulator ein polarisierender Strahlteiler zugeordnet ist, durch den die Mehrzahl von Strahlen auf den räumliche Lichtmodulator geleitet wird und der die vom räumlichen Lichtmodulator reflektierten Strahlen zur optischen Abbildungseinheit umlenkt.

Die Polarisation der Strahlen erfolgt hierbei bevorzugt dadurch, dass zwischen dem polarisierenden Strahlteiler und dem räumliche Lichtmodulator eine Verzögerungsplatte, insbesondere eine λ/2- oder λ/4-Platte, angeordnet ist. Dadurch wird die Polarisation der Strahlen gedreht, sodass sich an dem polarisierenden Strahlteiler insgesamt eine Änderung um 90° ergibt.

Eine bevorzugte Erweiterung der beschriebenen Anordnung des Lichtmodulators besteht darin, dass ein Spiegel vorgesehen ist und dass der räumliche Lichtmodulator und der Spiegel derart verlagerbar sind, dass wahlweise entweder der räumliche Lichtmodulator oder der Spiegel in eine im Strahlengang angeordnete Arbeitsposition bringbar ist.

Bevorzugt ist die Bestrahlungseinrichtung ausgebildet, um das Bauteil schichtweise mit sich in einer x-y-Ebene erstreckenden Schichten aufzubauen, wobei der Wechsel von einer Schicht zu einer nächsten Schicht die Veränderung der Relativposition der optischen Abbildungseinheit relativ zum Bauteil in einer zur x-y-Ebene senkrechten z-Richtung umfasst.

Weiters kann vorgesehen sein, dass das Material auf einem Materialträger, wie z.B. in einer Wanne, vorliegt, und die Bestrahlung des Materials von unten durch den für die Strahlung zumindest bereichsweise durchlässigen Materialträger erfolgt.

Die Bauplattform wird hierbei bevorzugt in Abstand vom Materialträger positioniert und das Bauteil wird durch Verfestigen von zwischen der Bauplattform und dem Materialträger befindlichen Volumenelementen auf der Bauplattform aufgebaut.

Die Abbildungseinheit kann als f-Theta Linse ausgeführt werden oder besteht bevorzugt aus einem Mikroskopieobjektiv und einer Relaysoptik in 4f-Anordnung, wobei die Ablenkeinheit und das Objektiv in der Brennebene der entsprechenden Linsen sitzen.

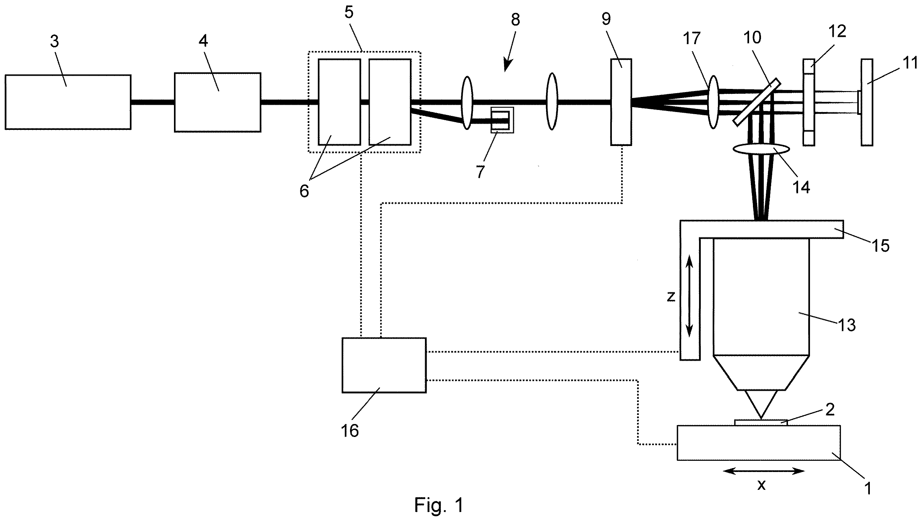

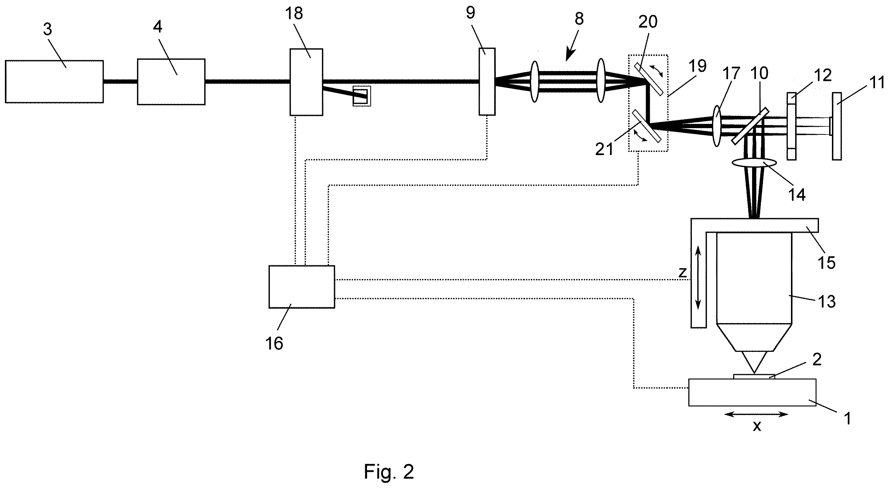

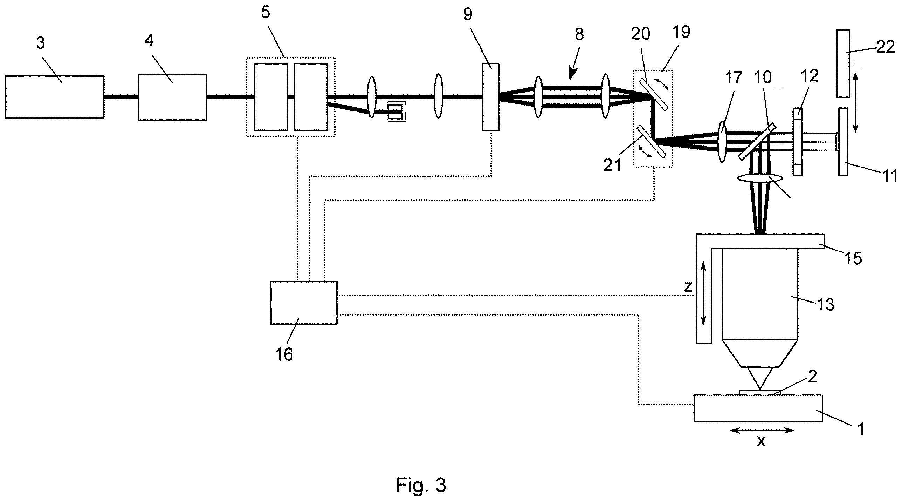

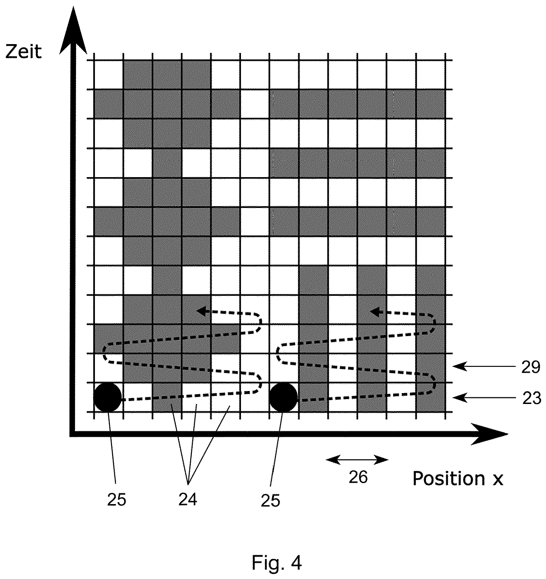

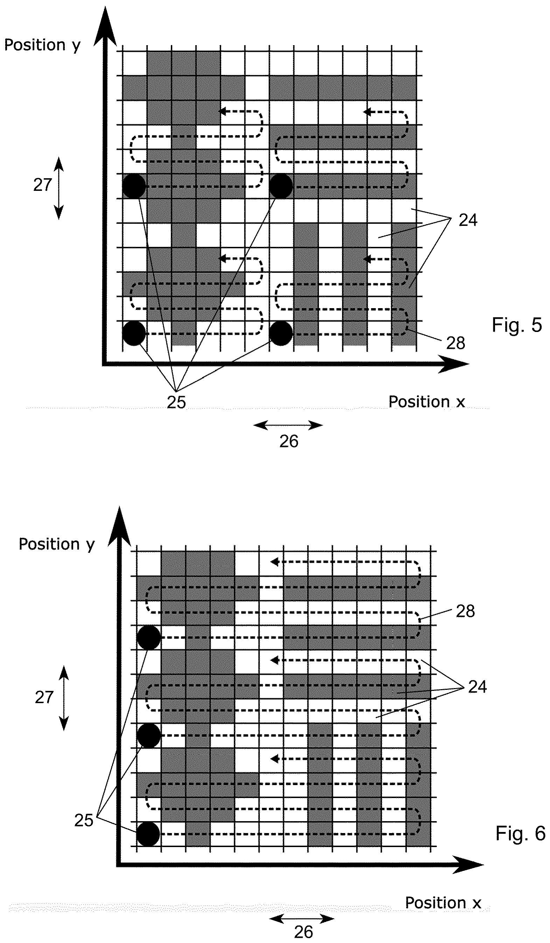

Die Erfindung wird nachfolgend anhand von in der Zeichnung schematisch dargestellten Ausführungsbeispielen näher erläutert. In dieser zeigen Fig. 1 eine schematische Darstellung einer ersten Ausführungsform der erfindungsgemäßen Vorrichtung, Fig. 2 eine schematische Darstellung einer zweiten Ausführungsform der erfindungsgemäßen Vorrichtung, Fig. 3 eine abgewandelte Ausbildung der ersten und zweiten Ausführungsform, Fig. 4 eine schematische Darstellung der Abtastung der Pixel eines räumlichen Lichtmodulators, Fig. 5 eine Darstellung gemäß Fig. 4 in einer abgewandelten Ausbildung und Fig. 6 eine Darstellung gemäß Fig. 4 in einer weiteren abgewandelten Ausbildung.

In Fig. 1 ist ein Träger mit 1 bezeichnet, auf welchem ein Bauteil aufgebaut werden soll. Der Träger 1 wird mit einem photopolymerisierbaren Material 2 beschichtet, in welches Laserstrahlen fokussiert werden, wobei jeder Laserstrahl nacheinander auf Fokuspunkte innerhalb des photopolymerisierbaren Materials fokussiert wird, wodurch jeweils ein am Fokuspunkt befindliches Volumenelement des Materials mittels Multiphotonenabsorption verfestigt wird. Zu diesem Zweck wird ein Laserstrahl von einer Strahlungsquelle 3 ausgesendet, durch einen Pulskompressor 4 geleitet und mit einem akustooptischen Modulatormodul 5 umfassend zwei akustooptische Modulatoren 6 einachsig zur Ausführung einer Hin- und Herbewegung abgelenkt. Der Strahl nullter Ordnung wird in einer Strahlfalle 7 aufgefangen. Der Strahl erster Ordnung wird über ein Relay-System 8 zu einem Strahlteiler 9 geleitet, welcher den Strahl in eine Mehrzahl von Strahlen aufteilt, die über eine Scan-Linse 17 zu einem polarisierenden Strahlteiler 10 geleitet werden. Der polarisierende Strahlteiler ist ausgebildet, um die Mehrzahl von Strahlen in Richtung zu einem räumlichen Lichtmodulator 11 durchzulassen. Die Strahlen passieren dabei eine Verzögerungsplatte 12, welche eine Polarisationskomponente relativ z.B. um λ/4 verzögert. Die Polarisation der vom räumlichen Lichtmodulator 11 reflektierten Strahlen wird in der Verzögerungsplatte 12 nochmals gedreht, sodass sie beim Auftreffen auf den polarisierenden Strahlteiler 10 in Richtung zur optische Abbildungseinheit 13 umgelenkt werden. Die Strahlen erreichen die optische Abbildungseinheit 13 dabei über eine Tubuslinse 14. Die optische Abbildungseinheit 13 umfasset ein Objektiv, welches die Laserstrahlen innerhalb eines Schreibbereichs fokussiert in das Material 2 einbringt.

Bei der Ausbildung gemäß Fig. 1 ist der räumliche Lichtmodulator 11 als Zeilenmodulator ausgebildet und umfasst eine Vielzahl von Pixeln, die in einer Reihe angeordnet sind. Jedes Pixel kann hierbei z.B. durch ein elektronisch ansteuerbares Beugungsgitter zwischen einem Ein- und einem Aus-Zustand umgeschaltet werden, sodass der jeweilige Strahl lediglich im Ein-Zustand zum polarisierenden Strahlteiler 10 reflektiert und in der Folge zur optische Abbildungseinheit 13 geleitet wird.

Der Strahlteiler 9 ist ausgebildet, um eine Mehrzahl von Strahlen zu erzeugen, die entlang der Pixelreihe verteilt sind und die Ablenkeinheit 5 ist ausgebildet, um die Mehrzahl von Strahlen gemeinsam entlang der Pixelreihe zu verlagern, d.h. die Pixelreihe abzuscannen. Je nachdem, ob das jeweilige Pixel sich im Ein- und Aus-Zustand befindet, wird der Strahl vom Lichtmodulator reflektiert und an der entsprechenden Stelle in das Material 2 eingebracht.

Nach dem Scannen der Pixelreihe und dem Erzeugen entsprechender verfestigter Volumenelemente im Material 2, die z.B. in einer in y-Richtung verlaufenden Reihe angeordnet sind, wird in die nächste Reihe gewechselt, indem der Träger 1 auf einem Kreuztisch angeordnet ist, der in x-Richtung relativ zur optische Abbildungseinheit 13 verschiebbar ist. Auf diese Weise können Volumenelemente in einer Vielzahl von Reihen erzeugt werden. Dies ist schematisch in Fig. 4 dargestellt.

Fig. 4 ist eine Reihe 23 von Pixeln 24 dargestellt, die sich z.B. in x-Richtung erstreckt. Im vorliegenden Beispiel erzeugt der Strahlteiler zwei Strahlen 25, die in einem gegenseitigen Abstand von sechs Pixeln angeordnet sind. Die Ablenkeinrichtung bewirkt, dass diese Gruppe von 2 Strahlen 25 entsprechend dem Pfeil 26 bewegt wird und auf diese Weise die Pixelreihe 23 abscannt. An den durch die dunkel gefärbten Pixel repräsentierten Stellen soll ein Volumenelement verfestigt werden. Dies wird dadurch erreicht, dass diese Pixel im Lichtmodulator in den Ein-Zustand geschaltet werden. Nach dem Scannen der Reihe 23 wird der Träger 1 in y-Richtung um eine Einheit verschoben, sodass neben den zuvor verfestigen Volumenelemente weitere Volumenelemente verfestigt werden können, wie dies durch den Pfeil 29 angedeutet ist. Beim Scannen der Pixelreihe werden nun andere Pixel in den Ein-Zustand geschaltet, sodass nach einer Mehrzahl von Reihen das in Fig. 4 dargestellte Muster erstellt wird.

Um das Bauteil schichtweise aufzubauen, werden im Material 2 Volumenelemente einer Schicht nach der anderen verfestigt. Zum Aufbau einer ersten Schicht werden die Laserstrahlen jeweils nacheinander auf Fokuspunkte, die in der Fokusebene der optische Abbildungseinheit 13 angeordnet sind, innerhalb des Materials 2 fokussiert. Für den Wechsel in die nächste Ebene wird die an einem Träger 15 befestigte optische Abbildungseinheit 13 in z-Richtung relativ zum Träger 1 um den Schichtlagenabstand verstellt. Alternativ kann auch der Träger 1 relativ zur feststehenden optische Abbildungseinheit 13 verstellt werden.

Weiters ist eine Steuerung 16 vorgesehen, welche die Ablenkeinheit 5, den Strahlteiler 8, den Lichtmodulator 11, den Höhenversteller 15 und den am Kreuztisch befestigen Träger 1 ansteuert.

Bei der Ausbildung gemäß Fig. 2 weist der räumliche Lichtmodulator 11 im Unterschied zur Ausbildung gemäß Fig. 1 ein zweidimensionales Pixelraster auf. Es ist daher eine Ablenkeinheit 19 vorgesehen, welche in der Lage ist die Mehrzahl von Strahlen, die vom Strahlteiler 9 erzeugt werden, um zwei senkrechte Achsen abzulenken. Die Ablenkeinheit 19 weist hierzu einen ersten Scanner 20 und eine zweiten Scanner 21 auf, welche so angesteuert werden, dass der erste Scanner ein Scannen jeweils einer Pixelreihe (in x-Richtung) durchführt wie im Zusammenhang mit der Ausbildung gemäß Fig. 1 beschrieben und der zweite Scanner die Strahlen quer dazu (in y-Richtung) von einer Reihe zur nächsten Reihe ablenkt. Ein weiterer Unterschied zur Ausbildung gemäß Fig. 1 besteht darin, dass die Ablenkeinheit 19 nach dem Strahlteiler 9 angeordnet ist. Weiters ist vor dem Strahlteiler 9 ein akustooptischer Modulator 18 angeordnet, welcher dazu dient, um die globale Leistungsgrenze einzustellen und die Leistung in den Wendepunkten des Scanners zu begrenzen, um eine Beschädigung des Modulators zu vermeiden.

Auf Grund der Verwendung eines räumlichen Lichtmodulators 11 mit einem zweidimensionalen Pixelarray können Volumenelemente innerhalb eines zweidimensionalen Schreibbereichs der optischem Abbildungseinheit 13 erzeugt werden. Wenn das herzustellende Bauteil in x- und/oder y-Richtung größer ist als der Schreibbereich der optischen Abbildungseinheit 13, werden Teilstrukturen des Bauteils nebeneinander aufgebaut (sog. Stitching). Dazu ist der Träger 1 auf einem Kreuztisch angeordnet, der in x- und/oder y-Richtung relativ zur optische Abbildungseinheit 13 verschiebbar ist.

Die Ausbildung gemäß Fig. 3 unterscheidet sich von der Ausbildung gemäß Fig. 2 darin, dass statt des räumlichen Lichtmodulators 11 ein Spiegel 22 in den Strahlengang gebracht werden kann, wenn auf die Funktionalität des Lichtmodulators 11 verzichtet werden kann.

Das Abrastern des zweidimensionalen Pixelrasters des räumlichen Modulators ist in Fig. 5 und Fig. 6 dargestellt. Hierbei sind die einzelnen Pixel wieder mit 24 bezeichnet und es ist ersichtlich, dass die Pixel 24 in mehreren Zeilen, d.h. in einer zweidimensionalen Anordnung vorgesehen sind. Bei der Ausführungsvariante gemäß Fig. 5 erzeugt der Strahlteiler vier Strahlen 25 in einer quadratischen Anordnung, wobei die einzelnen Strahlen mittels der Ablenkeinrichtung jeweils entlang des mit 28 bezeichneten Weges zweidimensional über das Pixelraster bewegt werden. Hierbei erfolgt die Strahlablenkung in Richtung des Doppelpfeils 26 (x-Richtung) z.B. mittels eines akusto-optischen Deflektors und die Strahlablenkung in Richtung des Doppelpfeils 27 (y-Richtung) z.B. mittels eines Galvanometerscanners. Durch Umschalten zwischen dem Ein- und dem Aus-Zustand wird das in Fig. 5 dargestellte Muster erzeugt, wobei an den durch die dunkel gefärbten Pixel (Ein-Zustand) repräsentierten Stellen ein Volumenelement verfestigt wird.

Bei der Ausführungsvariante gemäß Fig. 6 erzeugt der Strahlteiler drei Strahlen 25 in einer linienförmigen Anordnung, wobei die einzelnen Strahlen mittels der Ablenkeinrichtung jeweils entlang des mit 28 bezeichneten Weges zweidimensional über das Pixelraster bewegt werden. Hierbei erfolgt die Strahlablenkung in Richtung des Doppelpfeils 26 (x-Richtung) z.B. mittels eines Resonanz-Scanners und die Strahlablenkung in Richtung des Doppelpfeils 27 (y-Richtung) z.B. mittels eines Galvanometerscanners.

## Patentansprüche

1. Verfahren zur lithographiebasierten generativen Fertigung eines dreidimensionalen Bauteils, bei dem ein von einer elektromagnetischen Strahlungsquelle (3) ausgesendeter Strahl mit einem Strahlteiler (9) auf eine Mehrzahl von Strahlen aufgeteilt wird, die mittels einer optischen Abbildungseinheit (13) auf Fokuspunkte innerhalb eines Materials (2) fokussiert werden und die Fokuspunkte mittels einer der optischen Abbildungseinheit (13) in Strahlrichtung vorgeordneten Ablenkeinheit (5,19) verlagert werden, wodurch nacheinander jeweils an den Fokuspunkten befindliche Volumenelemente des Materials (2) mittels Multiphotonenabsorption verfestigt werden, **dadurch gekennzeichnet, dass** ein räumlicher Lichtmodulator (11) mit einer Mehrzahl elektronisch ansteuerbarer Pixel vorgesehen wird, die von der Mehrzahl von Strahlen abgerastert werden und die in Abhängigkeit von der zu verwirklichenden Geometrie des Bauteils einzeln zwischen wenigstens einem Ein- und einem Aus-Zustand umgeschaltet werden, sodass der jeweilige Strahl lediglich in dem wenigstens einen Ein-Zustand zur Abbildungseinheit (13) geleitet wird.

2. Verfahren nach Anspruch 1, **dadurch gekennzeichnet, dass** der wenigstens eine Ein-Zustand wenigstens einen ersten und einen zweiten Ein-Zustand umfasst, wobei die Pixel einzeln zwischen dem Aus-Zustand und dem ersten und dem zweiten Ein-Zustand umgeschaltet werden, wobei der erste und der zweite Ein-Zustand voneinander verschiedene Strahlungsintensitäten am Fokuspunkt erzeugen.

3. Verfahren nach Anspruch 1 oder 2, **dadurch gekennzeichnet, dass** die Strahlungsintensität jedes Pixels des räumlichen Lichtmodulators einstellbar ist und die Strahlungsintensität in Abhängigkeit von der Belichtungsdauer der Pixels derart eingestellt wird, dass die Volumenelemente dieselbe Strahlungsleistung erhalten.

4. Verfahren nach Anspruch 1 oder 2, **dadurch gekennzeichnet, dass** die Strahlungsintensität jedes Pixels des räumlichen Lichtmodulators einstellbar ist und die Strahlungsintensität derart eingestellt wird, dass Volumenelemente voneinander verschiedene Strahlungsleistung erhalten, um Volumenelemente mit voneinander verschiedener räumlicher Ausdehnung, insbesondere in Einstrahlungsrichtung, zu erzeugen.

5. Verfahren nach einem der Ansprüche 1 bis 4, **dadurch gekennzeichnet, dass** die Pixel des räumlichen Lichtmodulators (11) in wenigstens einer, z.B. genau einer, entlang einer Geraden verlaufenden Reihe angeordnet sind und die Aufteilung der Strahlen mittels des Strahlteilers (9) entlang der Geraden erfolgt, sodass die Strahlen um eine Mehrzahl von Pixeln voneinander beabstandet auf die Reihe von Pixeln auftreffen.

6. Verfahren nach Anspruch 5, **dadurch gekennzeichnet, dass** die Pixel des räumlichen Lichtmodulators (11) in mehreren parallelen Reihen angeordnet sind und die Mehrzahl von Strahlen um zwei zueinander bevorzugt senkrechte Achsen abgelenkt werden, wobei die Strahlablenkung um eine erste Achse vorzugsweise mittels eines Polygonscanners oder Resonanz-Scanners (21) erfolgt und die Strahlablenkung um eine zweite Achse bevorzugt mittels eines Galvanometer-Scanners (20) erfolgt.

7. Verfahren nach einem der Ansprüche 1 bis 6, **dadurch gekennzeichnet, dass** die Mehrzahl von Strahlen unter Zwischenschaltung eines polarisierenden Strahlteilers (10) auf den räumlichen Lichtmodulator (11) geleitet werden, die Strahlen vom räumlichen Lichtmodulator (11) reflektiert werden und mit geänderter Polarisierung auf den polarisierenden Strahlteiler (10) auftreffen, der die Strahlen zur optischen Abbildungseinheit (13) leitet.

8. Verfahren nach einem der Ansprüche 1 bis 7, **dadurch gekennzeichnet, dass** ein Spiegel (22) vorgesehen wird und dass der räumliche Lichtmodulator (11) und der Spiegel (22) derart verlagert werden, dass wahlweise entweder der räumliche Lichtmodulator (11) oder der Spiegel (22) in eine im Strahlengang angeordnete Arbeitsposition gebracht wird.

9. Verfahren nach einem der Ansprüche 1 bis 8, **dadurch gekennzeichnet, dass** das Bauteil schichtweise mit sich in einer x-y-Ebene erstreckenden Schichten aufgebaut wird, wobei der Wechsel von einer Schicht zu einer nächsten Schicht die Veränderung der Relativposition der optischen Abbildungseinheit (13) relativ zum Bauteil in einer senkrecht zur x-y-Ebene verlaufenden z-Richtung umfasst.

10. Vorrichtung zur lithographiebasierten generativen Fertigung eines dreidimensionalen Bauteils, insbesondere zur Durchführung eines Verfahrens nach einem der Ansprüche 1 bis 9, umfassend einen Materialträger (1) für ein verfestigbares Material (2) und eine Bestrahlungseinrichtung, die zur ortsselektiven Bestrahlung des verfestigbaren Materials mit wenigstens einem Strahl ansteuerbar ist, wobei die Bestrahlungseinrichtung einen Strahlteiler (9) zur Aufteilung eines Eingangsstrahls in eine Mehrzahl von Strahlen, eine dem Strahlteiler (9) im Strahlengang vor- oder nachgeordnete Ablenkeinheit (5,19) und eine der Ablenkeinheit (5,19) und dem Strahlteiler (9) nachgeordnete optische Abbildungseinheit (13) umfasst, um jeden Strahl nacheinander auf Fokuspunkte innerhalb des Materials (2) zu fokussieren, wodurch jeweils ein am Fokuspunkt befindliches Volumenelement des Materials (2) mittels Multiphotonenabsorption verfestigbar ist, **dadurch gekennzeichnet, dass** zwischen der Abbildungseinheit (13) einerseits und dem Strahlteiler (9) und der Ablenkeinheit (5,19) andererseits ein räumlicher Lichtmodulator (11) mit einer Mehrzahl elektronisch ansteuerbarer Pixel angeordnet ist, die von der Mehrzahl von Strahlen abtastbar sind und die einzeln zwischen wenigstens einem Ein- und einem Aus-Zustand schaltbar sind, sodass der jeweilige Strahl lediglich in dem wenigstens einen Ein-Zustand zur Abbildungseinheit (13) geleitet wird.

11. Vorrichtung nach Anspruch 10, **dadurch gekennzeichnet, dass** der wenigstens eine Ein-Zustand wenigstens einen ersten und einen zweiten Ein-Zustand umfasst, wobei die Pixel einzeln zwischen dem Aus-Zustand und dem ersten und dem zweiten Ein-Zustand schaltbar sind, wobei der erste und der zweite Ein-Zustand voneinander verschiedene Strahlungsintensitäten am Fokuspunkt erzeugen.

12. Vorrichtung nach Anspruch 10 oder 11, **dadurch gekennzeichnet, dass** der räumliche Lichtmodulator (11) eine eindimensionale Anordnung der Pixel aufweist.

13. Vorrichtung nach Anspruch 10, 11 oder 12, **dadurch gekennzeichnet, dass** der räumliche Lichtmodulator (11) ein dynamisch einstellbares Beugungsgitter umfasst.

14. Vorrichtung nach einem der Ansprüche 10 bis 13, **dadurch gekennzeichnet, dass** die Ablenkeinheit (5) wenigstens einen akustooptischen Modulator aufweist.

15. Vorrichtung nach Anspruch 10 oder 11, **dadurch gekennzeichnet, dass** der räumliche Lichtmodulator (11) eine zweidimensionale Anordnung der Pixel aufweist.

16. Vorrichtung nach Anspruch 15, **dadurch gekennzeichnet, dass** der räumliche Lichtmodulator (11) als reflektierendes Flüssigkristall-Mikrodisplay ausgebildet ist.

17. Vorrichtung nach Anspruch 15 oder 16, **dadurch gekennzeichnet, dass** die Ablenkeinheit (19) als zweiachsige Ablenkeinheit ausgebildet ist und vorzugsweise einen Polygonscanner oder einen Resonanz-Scanner (21) für die Strahlablenkung um eine erste Achse und einen Galvanometer-Scanner (20) für die Strahlablenkung um eine zweite Achse umfasst.

18. Vorrichtung nach einem der Ansprüche 10 bis 17, **dadurch gekennzeichnet, dass** dem räumlichen Lichtmodulator (11) ein polarisierender Strahlteiler (10) zugeordnet ist, durch den die Mehrzahl von Strahlen auf den räumliche Lichtmodulator (11) geleitet wird und der die vom räumlichen Lichtmodulator (11) reflektierten Strahlen zur optischen Abbildungseinheit (13) umlenkt.

19. Vorrichtung nach Anspruch 18, **dadurch gekennzeichnet, dass** zwischen dem polarisierenden Strahlteiler (10) und dem räumliche Lichtmodulator (11) eine Verzögerungsplatte (12), insbesondere eine λ/2- oder λ/4-Platte, angeordnet ist.

20. Vorrichtung nach einem der Ansprüche 10 bis 19, **dadurch gekennzeichnet, dass** ein Spiegel (22) vorgesehen ist und dass der räumliche Lichtmodulator (11) und der Spiegel (22) derart verlagerbar sind, dass wahlweise entweder der räumliche Lichtmodulator (11) oder der Spiegel (22) in eine im Strahlengang angeordnete Arbeitsposition bringbar ist.

21. Vorrichtung nach einem der Ansprüche 10 bis 20, **dadurch gekennzeichnet, dass** die Bestrahlungseinrichtung ausgebildet ist, um das Bauteil schichtweise mit sich in einer x-y-Ebene erstreckenden Schichten aufzubauen, wobei der Wechsel von einer Schicht zu einer nächsten Schicht die Veränderung der Relativposition der optischen Abbildungseinheit (13) relativ zum Bauteil in einer zur x-y-Ebene senkrechten z-Richtung umfasst.

## Claims

1. Method for lithography-based generative manufacturing of a three-dimensional component, in which a beam emitted by an electromagnetic radiation source (3) is split with a beam splitter (9) into a plurality of beams which are focused by means of an optical imaging unit (13) onto focal points within a material (2) and the focal points are displaced by means of a deflection unit (5, 19) arranged upstream of the optical imaging unit (13) in the beam direction, whereby volume elements of the material (2) located at the respective focal points are successively solidified by means of multiphoton absorption, **characterized in that** a spatial light modulator (11) is provided with a plurality of electronically controllable pixels which are scanned by the plurality of beams and which are switched individually between at least one on-state and an off-state depending on the geometry of the component to be realized, so that the respective beam is guided to the imaging unit (13) only in the at least one on-state.

2. Method according to claim 1, **characterized in that** the at least one on-state comprises at least a first and a second on-state, wherein the pixels are individually switched between the off-state and the first and the second on-state, wherein the first and the second on-state generate different radiation intensities at the focal point.

3. Method according to claim 1 or 2, **characterized in that** the radiation intensity of each pixel of the spatial light modulator is adjustable and the radiation intensity is adjusted depending on the exposure time of the pixels in such a way that the volume elements receive the same radiation power.

4. Method according to claim 1 or 2, **characterized in that** the radiation intensity of each pixel of the spatial light modulator is adjustable and the radiation intensity is adjusted in such a way that volume elements receive different radiation power from one another in order to produce volume elements with different spatial dimensions from one another, in particular in the direction of irradiation.

5. Method according to any one of claims 1 to 4, **characterized in that** the pixels of the spatial light modulator (11) are arranged in at least one, e.g. exactly one, row extending along a straight line and the splitting of the beams is carried out by means of the beam splitter (9) along the straight line, so that the beams impinge on the row of pixels spaced apart by a plurality of pixels.

6. Method according to claim 5, **characterized in that** the pixels of the spatial light modulator (11) are arranged in a plurality of parallel rows and the plurality of beams are deflected about two axes which are preferably perpendicular to one another, the beam deflection about a first axis preferably being effected by means of a polygon scanner or resonance scanner (21) and the beam deflection about a second axis preferably being effected by means of a galvanometer scanner (20).

7. Method according to any one of claims 1 to 6, **characterized in that** the plurality of beams are directed to the spatial light modulator (11) with the interposition of a polarizing beam splitter (10), the beams are reflected by the spatial light modulator (11) and impinge with changed polarization on the polarizing beam splitter (10), which directs the beams to the optical imaging unit (13).

8. Method according to any one of claims 1 to 7, **characterized in that** a mirror (22) is provided and **in that** the spatial light modulator (11) and the mirror (22) are displaced in such a way that either the spatial light modulator (11) or the mirror (22) is brought into a working position arranged in the beam path.

9. Method according to any one of claims 1 to 8, **characterized in that** the component is built up layer by layer with layers extending in an x-y plane, the change from one layer to a next layer comprising the change in the relative position of the optical imaging unit (13) relative to the component in a z direction running perpendicular to the x-y plane.

10. Device for lithography-based generative manufacturing of a three-dimensional component, in particular for carrying out a method according to any one of claims 1 to 9, comprising a material carrier (1) for a solidifiable material (2) and an irradiation device which can be controlled for position-selecitve irradiation of the solidifiable material with at least one beam, wherein the irradiation device comprises a beam splitter (9) for splitting an input beam into a plurality of beams, a deflection unit (5, 19) arranged upstream or downstream of the beam splitter (9) in the beam path and an optical imaging unit (13) arranged downstream of the deflection unit (5, 19) and the beam splitter (9), in order to focus each beam successively onto focal points within the material (2), whereby a volume element of the material (2) located at the respective focal point can be solidified by means of multiphoton absorption, **characterized in that** between the imaging unit (13) on the one hand and the beam splitter (9) and the deflection unit (5,19) on the other hand, a spatial light modulator (11) with a plurality of electronically controllable pixels is arranged, which can be scanned by the plurality of beams and which can be switched individually between at least one on-state and an off-state, so that the respective beam is guided to the imaging unit (13) only in the at least one on-state.

11. Device according to claim 10, **characterized in that** the at least one on-state comprises at least a first and a second on-state, wherein the pixels are individually switchable between the off-state and the first and the second on-state, wherein the first and the second on-state generate different radiation intensities at the focal point.

12. Device according to claim 10 or 11, **characterized in that** the spatial light modulator (11) comprises a one-dimensional arrangement of the pixels.

13. Device according to claim 10, 11 or 12, **characterized in that** the spatial light modulator (11) comprises a dynamically adjustable diffraction grating.

14. Device according to any one of claims 10 to 13, **characterized in that** the deflection unit (5) comprises at least one acousto-optical modulator.

15. Device according to claim 10 or 11, **characterized in that** the spatial light modulator (11) comprises a two-dimensional arrangement of the pixels.

16. Device according to claim 15, **characterized in that** the spatial light modulator (11) is designed as a reflective liquid crystal microdisplay.

17. Device according to claim 15 or 16, **characterized in that** the deflection unit (19) is designed as a two-axis deflection unit and preferably comprises a polygon scanner or a resonance scanner (21) for beam deflection about a first axis and a galvanometer scanner (20) for beam deflection about a second axis.

18. Device according to any one of claims 10 to 17, **characterized in that** a polarizing beam splitter (10) is assigned to the spatial light modulator (11), through which the plurality of beams is directed onto the spatial light modulator (11) and which deflects the beams reflected by the spatial light modulator (11) to the optical imaging unit (13).

19. Device according to claim 18, **characterized in that** a waveplate (12), in particular a λ/2 or λ/4 plate, is arranged between the polarizing beam splitter (10) and the spatial light modulator (11).

20. Device according to any one of claims 10 to 19, **characterized in that** a mirror (22) is provided and **in that** the spatial light modulator (11) and the mirror (22) can be displaced in such a way that either the spatial light modulator (11) or the mirror (22) can be brought into a working position arranged in the beam path.

21. Device according to any one of claims 10 to 20, **characterized in that** the irradiation device is designed to build up the component layer by layer with layers extending in an x-y plane, the change from one layer to a next layer comprising the change in the relative position of the optical imaging unit (13) relative to the component in a z-direction perpendicular to the x-y plane.

## Revendications

1. Procédé de fabrication générative basée sur la lithographie d'un composant tridimensionnel, dans lequel un rayon émis par une source de rayonnement électromagnétique (3) est réparti avec un diviseur de rayon (9) en une pluralité de rayons qui sont focalisés au moyen d'une unité de représentation optique (13) sur des points de focalisation à l'intérieur d'un matériau (2) et les points de focalisation sont déplacés au moyen d'une unité de déviation (5, 19) disposée en amont, dans la direction des rayons, de l'unité de représentation optique (13), ce qui permet de solidifier successivement des éléments de volume du matériau (2) se trouvant au niveau des points de focalisation par absorption multi-photonique, **caractérisé en ce qu'**un modulateur de lumière spatial (11) est prévu, avec une pluralité de pixels pouvant être contrôlés électroniquement, qui sont balayés par la pluralité de rayons et qui sont commutés individuellement, en fonction de la géométrie du composant à réaliser, entre au moins un état activé et un état désactivé, de sorte que le rayon respectif est conduit, uniquement dans l'au moins un état activé, vers l'unité de représentation (13).

2. Procédé selon la revendication 1, **caractérisé en ce que** l'au moins un état activé comprend au moins un premier et un deuxième état activé, dans lequel les pixels sont commutés individuellement entre l'état désactivé et les premier et deuxième états activés, dans lequel les premier et deuxième états activés génèrent des intensités de rayonnements différentes entre elles au niveau du point de focalisation.

3. Procédé selon la revendication 1 ou 2, **caractérisé en ce que** l'intensité de rayonnement de chaque pixel du modulateur de lumière spatial est réglable et l'intensité de rayonnement est réglé en fonction de la durée d'éclairage des pixels, de sorte que les éléments de volume reçoivent la même puissance de rayonnement.

4. Procédé selon la revendication 1 ou 2, **caractérisé en ce que** l'intensité de rayonnement de chaque pixel du modulateur de lumière spatial est réglable et l'intensité de rayonnement est réglé de sorte que des éléments de volume reçoivent des puissances de rayonnement différentes entre elles afin de générer des éléments de volume avec des extensions spatiales différentes entre elles, plus particulièrement dans la direction du rayonnement entrant.

5. Procédé selon l'une des revendications 1 à 4, **caractérisé en ce que** les pixels du modulateur de lumière spatial (11) sont disposés sur au moins une, par exemple exactement une rangée s'étendant le long d'une droite et la répartition des rayons a lieu au moyen du diviseur de rayons (9) le long de la droite, de sorte que les rayons arrivent sur la rangée de pixels de façon à être distants entre eux d'une pluralité de pixels.

6. Procédé selon la revendication 5, **caractérisé en ce que** les pixels du modulateur de lumière spatial (11) sont disposés dans plusieurs rangées parallèles et la pluralité de rayons sont déviés autour de deux axes, de préférence perpendiculaires entre eux, dans lequel la déviation des rayons autour d'un premier axe a lieu de préférence au moyen d'un scanner polygonal ou d'un scanner à résonance (21) et la déviation des rayons autour du deuxième axe a lieu de préférence au moyen d'un scanner à galvanomètre (20).

7. Procédé selon l'une des revendications 1 à 6, **caractérisé en ce que** la pluralité de rayons sont conduits vers le modulateur de lumière spatial (11) en intercalant un diviseur de rayon polarisant (10), les rayons sont réfléchis par le modulateur de lumière spatial (11) et arrivent avec une polarisation modifiée sur le diviseur de rayon polarisant (10) qui guide les rayons vers l'unité de représentation optique (13).

8. Procédé selon l'une des revendications 1 à 7, **caractérisé en ce qu'**un miroir (22) est prévu et **en ce que** le modulateur de lumière spatial (11) et le miroir (22) sont déplacés de sorte que soit le modulateur de lumière spatial (11) soit le miroir (22) est amené dans une position de travail disposée dans le trajet des rayons.

9. Procédé selon l'une des revendications 1 à 8, **caractérisé en ce que** le composant est structuré en couches avec des couches s'étendant dans un plan x-y, dans lequel le passage d'une couche à la couche suivante comprend la modification de la position relative de l'unité de représentation optique (13) par rapport au composant dans une direction z s'étendant perpendiculairement au plan x-y.

10. Dispositif de fabrication générative basée sur la lithographie d'un composant tridimensionnel, plus particulièrement pour l'exécution d'un procédé selon l'une des revendications 1 à 9, comprenant un support de matériau (1) pour un matériau solidifiable (2) et un dispositif d'irradiation qui peut être contrôlé pour une irradiation sélective locale du matériau solidifiable avec au moins un rayon, dans lequel le dispositif d'irradiation comprend un diviseur de rayons (9) pour la division d'un rayon d'entrée en une pluralité de rayons, une unité de déviation (5, 19) disposée en amont ou en aval du diviseur de rayons (9) et une unité de représentation optique (13) disposée en aval de l'unité de déviation (5, 19) et du diviseur de rayons (9), afin de focaliser chaque rayon successivement sur des points de focalisation à l'intérieur du matériau (2), afin de solidifier respectivement un élément de volume du matériau (2) se trouvant au niveau du point de focalisation par absorption multi-photonique, **caractérisé en ce que**, entre l'unité de représentation (13) d'une part et le diviseur de rayons (9) et l'unité de déviation (5, 19) d'autre part, est disposé un modulateur de lumière spatial (11) avec une pluralité de pixels contrôlables électroniquement, qui peuvent être balayés par la pluralité de rayons et qui peuvent être commutés individuellement entre au moins un état activé et un état désactivé, de sorte que le rayon respectif est conduit, uniquement dans l'au moins un état activé, vers l'unité de représentation (13).

11. Dispositif selon la revendication 10, **caractérisé en ce que** l'au moins un état activé comprend au moins un premier et un deuxième état activé, dans lequel les pixels peuvent être commutés individuellement entre l'état désactivé et les premier et deuxième états activés, dans lequel les premier et deuxième états activés génèrent des intensités de rayonnement différentes entre elles au niveau du point de focalisation.

12. Dispositif selon la revendication 10 ou 11, **caractérisé en ce que** le modulateur de lumière spatial (11) comprend une disposition unidimensionnelle des pixels.

13. Dispositif selon la revendication 10, 11 ou 12, **caractérisé en ce que** le modulateur de lumière spatial (11) comprend un réseau de diffraction réglable de manière dynamique.

14. Dispositif selon l'une des revendications 10 à 13, **caractérisé en ce que** l'unité de déviation (5) comprend au moins un modulateur acousto-optique.

15. Dispositif selon la revendication 10 ou 11, **caractérisé en ce que** le modulateur de lumière spatial (11) comprend une disposition bidimensionnelle des pixels.

16. Dispositif selon la revendication 15, **caractérisé en ce que** le modulateur de lumière spatial (11) est conçu comme un micro-affichage à cristaux liquides.

17. Dispositif selon la revendication 15 ou 16, **caractérisé en ce que** l'unité de déviation (19) est conçue comme une unité de déviation biaxiale et comprend de préférence un scanner polygonal ou un scanner à résonance (21) pour la déviation des rayons autour d'un premier axe et un scanner à galvanomètre (20) pour la déviation des rayons autour d'un deuxième axe.

18. Dispositif selon l'une des revendications 10 à 17, **caractérisé en ce que**, au modulateur de lumière spatial (11), correspond un diviseur de rayons polarisant (10) grâce auquel la pluralité de rayons sont conduits vers le modulateur de lumière spatial (11) et qui dévie les rayons réfléchis par le modulateur de lumière spatial (11) vers l'unité de représentation optique (13).

19. Dispositif selon la revendication 18, **caractérisé en ce que**, entre le diviseur de rayons polarisant (10) et le modulateur de lumière spatial (11), est disposée une plaque de retard (12), plus particulièrement une plaque λ/2 ou λ/4.

20. Dispositif selon l'une des revendications 10 à 19, **caractérisé en ce qu'**un miroir (22) est prévu et **en ce que** le modulateur de lumière spatial (11) et le miroir (22) peuvent être déplacés de sorte que soit le modulateur de lumière spatial (11) soit le miroir (22) peut être amené dans une position de travail disposée dans le trajet des rayons.

21. Dispositif selon l'une des revendications 10 à 20, **caractérisé en ce que** le dispositif d'irradiation est conçu pour structurer le composant par couches avec des couches s'étendant dans un plan x-y, dans lequel le passage d'une couche à la couche suivante comprend la modification de la position relative de l'unité de représentation optique (13) par rapport au composant dans une direction z perpendiculaire au plan x-y.
